## Europäisches Patentamt
## European Patent Office
## Office européen des brevets

(11) Veröffentlichungsnummer: **0 263 988**
**B1**

(12) **EUROPÄISCHE PATENTSCHRIFT**

(45) Veröffentlichungstag der Patentschrift:
05.12.90

(51) Int. Cl.⁵: **B65G 1/127, E04H 6/14**

(21) Anmeldenummer: 87113433.4

(22) Anmeldetag: 15.09.87

(54) Regalanordnung.

(30) Priorität: 17.09.86 DE 3631602

(43) Veröffentlichungstag der Anmeldung:
20.04.88 Patentblatt 88/16

(45) Bekanntmachung des Hinweises auf die Patenterteilung:
05.12.90 Patentblatt 90/49

(84) Benannte Vertragsstaaten:
AT BE CH DE FR GB IT LI NL SE

(56) Entgegenhaltungen:
CH-A- 329 965
CH-A- 551 328
DE-A- 1 759 343
DE-A- 1 938 640
DE-B- 1 297 023
DE-B- 1 654 538
DE-U- 6 913 565
DE-U- 8 402 918
GB-A- 1 419 338
GB-A- 2 172 574

PATENT ABSTRACTS OF JAPAN, Band 4,
Nr. 123 (M-29)[605], 30. August 1980; & JP - A
- 55 80609 (ISHIKAWAJIMA HARIMA
JUKOGYO) 18.06.1980

(73) Patentinhaber: MEGAMAT GmbH & Co., Krumbacher
Strasse 4, D-8909 Neuburg/Kammel(DE)

(72) Erfinder: Volz, Otto, Mösle 35,
D-8870 Günzburg-Reisensburg(DE)
Erfinder:
Der weitere Erfinder hat auf seine Nennung verzichtet

(74) Vertreter: Kahler, Kurt, Dipl.-Ing., Patentanwälte Kahler
& Käck Gerberstrasse 3 Postfach 1249,
D-8948 Mindelheim(DE)

ACTORUM AG

## Beschreibung

Die Erfindung betrifft eine Regalanordnung, bestehend aus einer Anreihung mehrerer paternosterartiger Regaleinheiten mit an wenigstens zwei endlosen Ketten befestigten, umlaufenden Lagergutträgern, wobei die Ketten in den Überschubbereichen der Lagergutträger an um wenigstens eine Achse antreibbaren Kettenrädern geführt sind, sowie mit wenigstens einer Gutein- und -ausgabe quer zur Achse der Kettenräder.

Bei derartigen Regalanordnungen besteht das Hauptproblem in der möglichst günstigen Ausnützung des zur Verfügung stehenden Raumes bei zugleich günstigem Zugriff auf einzelne Lagerteile.

Eine derartige Regalanordnung ist aus der DE-A 1 654 538 bekannt, bei der eine rationellere Raumnutzung durch die Anordnung eines Teils des sogenannten Paternosterschrankes in einem weiteren Raum wie z.B. einem Keller erzielt werden soll. Dabei kann der Paternosterschrank so ausgestaltet sein, daß Teile des Schrankes zugleich als Tragwerk für Hallenwände und/oder Hallendach, sowie die Hallenwände teilweise die Abdeckung des Paternosterschrankes bilden. Hierdurch ergibt sich durch die Doppelfunktion eine relativ billige Bauweise, sowie durch die Aufstellung jeweils zweier Paternosterschränke "Rücken an Rücken" eine relativ gute Raumausnutzung, da nur mehr ein Bedienungsflur für jeweils zwei Reihen von Paternosterschränken nötig ist.

Bei diesen Paternosterschränken mit der Gutein- und -ausgabe quer zur Kettenradachse ist zwar für hohe Lagerkapazitäten eine beliebige Anreihung jeweils immer mit der Stirnseite zueinander möglich, jedoch beträgt die hierdurch erzielbare Raumausnutzung nur ca. 60%, da für die seitliche Gutein/-ausgabe ein Bediengang mit mindestens einer Breite, die der Regaltiefe entspricht, verbleiben muß. Dies gilt auch für die heute häufig verwendeten Hochregallager mit starren Lagergutträgern.

Desweiteren ist bei dieser Bauart nachteilig, daß für sehr hohe Lagerkapazitäten eine sehr große Standfläche benötigt wird, da die Bauhöhe durch baurechtliche Vorschriften und die Knickfestigkeit der Regaleinheiten beschränkt ist und sich somit die relativ schlechte Raumausnutzung aufgrund der notwendigen Bediengänge eine große Oberfläche des Gesamtlagers ergibt. Dies ist besonders bei klimatisierten Lagern, wie z.B. für Lebensmittel aufgrund der damit verbundenen Energieverluste nachteilig.

Weiterhin sind Paternosterlager bekannt, bei denen die Anreihung der einzelnen Einheiten an der achsparallelen Längsseite erfolgt. Dies bedingt jedoch eine stirnseitige Gutein/-ausgabe, wie dies in der US-A 1 859 874 beschrieben ist. Sollte hiermit ein Lager mit großem Volumen und möglichst kleiner Lageroberfläche, um die äußere Verkleidungsfläche gering zu halten, verwirklicht werden, würde dies eine etwa quadratische Grundfläche verlangen, wobei dann eine Vielzahl von Bediengängen nötig wären. Neben dieser schlechten Raumausnutzung ist die stirnseitige Beschickung und Entnahme aufgrund der hohen Lagertiefe mit Problemen verbunden.

Eine etwas höhere Raumausnutzung erzielen die sog. Verschieberegale, bei denen einzelne Regaleinheiten auf Schienen verschiebbar gelagert sind. Für den Zugriff werden die Regaleinheiten auseinandergeschoben und somit ein Bedienungsgang geschaffen, so daß für eine Vielzahl von Regaleinheiten nur ein freier Bedienungsgang ausreicht. Mit der Anzahl der Regaleinheiten steigt dabei zwar die Raumausnutzung, jedoch auch die Zugriffszeit beträchtlich an, da nunmehr im ungünstigsten Fall nahezu alle Regaleinheiten verschoben werden müssen.

Demzufolge liegt der Erfindung die Aufgabe zugrunde, eine kompakte Regalanordnung der oben geannten Art zu schaffen, die sowohl bei kleinstmöglicher Standfläche eine größtmögliche Lagerkapazität als auch bei optimaler Raumausnutzung günstige Zugriffsmöglichkeiten zu jeder Regaleinheit bietet.

Diese Aufgabe wird erfindungsgemäß durch die kennzeichnenden Merkmale des Anspruchs 1 gelöst.

Diese erfindungsgemäße Anordnung der Regaleinheiten und der Ein/Ausgabe ermöglicht eine sehr günstige Raumausnutzung, da Freiräume für Entnahmegeräte entfallen können. Lediglich ein Bewegungsfreiraum für das Entnahmegerät, wie z.B. einen Brückenkran, kann nicht als Lagerraum benutzt werden. Da dieser Freiraum insbesonders bei hohen Regaleinheiten und Lagergut mit geringer Bauhöhe niedrig gehalten werden kann, ergibt sich eine sehr hohe Lagerdichte, ähnlich der von Verschieberegalen.

Desweiteren ermöglichen die paternosterartigen Regaleinheiten sehr kurze Zugriffzeiten, da diese jeweils einzeln und unabhängig vom Entnahmegerät, sowie in ihrer Umlaufrichtung auf dem kürzesten Weg zur Ein/Ausgabeöffnung bewegt werden können. Bei Abruf eines bestimmten Lagergutes kann somit gleichzeitig die Regaleinheit während der Bewegung des Entnahmegerätes angesteuert werden, so daß bei Eintreffen z.B. des Brückenkrans an der gewünschten Regaleinheit bereits der gewünschte Lagergutträger an der Ein/Ausgabeöffnung im Überschubbereich, z.B. an der oberen Deckfläche, zum Ein- oder Auslagern bereitsteht.

In vorteilhafter Weise sind dabei, besonders bei der Entnahme im oberen Überschubbereich, auch gezielte Einzelentnahmen bestimmter Lagergüter durch Handhabungsgeräte möglich, sofern diese in ihren jeweiligen Lagergutträgern, z.B. durch Paletten oder gutspezifische Kassetten, eine bestimmte Position zugeordnet haben. Bei bisherigen Regalen mußten meist bei Anforderung von z.B. einem Elektro motor, der in einem Ersatzteillager zusammen mit weiteren Motoren gleichen Typs in einem Behälter lagerte, der gesamte Behälter ausgelagert werden, der angeforderte Motor per Hand entnommen und dann der Behälter wieder eingelagert werden. Selbst bei einer im Hochregallager mitfahrenden Bedienperson mußte meist der Behälter seitlich aus den starren Lagergutträgern ausgefahren werden, um so Zugriff zu der gewünschten Ware zu erhalten. Dahingegen liegen bei der erfindungsgemäßen Anordnung die oberen Überschubbereiche an der Deckfläche frei und ein Zugriff durch eine Bedienperson oder ein Handhabungsgerät auf einzelne Waren in einem Behälter oder auch auf den gesamten Behälter z.B. mittels Greiferzangen oder Sauggreifer ist bequem möglich, was insbesondere auch für den in Zukunft geplanten "Griff in die Kiste" bei chaotisch im Behälter liegenden Artikeln wichtig ist, da hierbei das Handhabungsgerät einen großen Bewegungsfreiraum für unterschiedliche Zugriffsrichtungen benötigt.

Weitere vorteilhafte Ausgestaltungen wie die Einzel- oder Behälterentnahme mittels Brückenkran und Handlinggerät am oberen Überschubbereich und gleichzeitige Eingabe angelieferter Behälter am unteren Überschubbereich einer anderen Regaleinheit z.B. mittels einer Stichbahn oder Flurförderfahrzeugen sind Gegenstand der Unteransprüche. In vorteilhafter Weise läßt sich bei der letztgenannten Ausführungsform der Bewegungsablauf der Paternosterregale nutzen, da sie in ihrem Überschubbereich in die Bewegungsbahn der Stichbahn 'eintauchen' und mittels dieser "Schöpfbewegung" von kammartig ineinandergreifendem Ladegutträger und Stichbahnplattform Lagergutbehälter oder flächiges Lagergut von dieser übernehmen bzw. auf dieser zum Auslagern absetzen können. Dabei braucht die Stichbahnplattform lediglich durch eine einfache Hubvorrichtung etwas angehoben werden. Ebenso kann auch ein induktiv geführtes Flurförderfahrzeug für mehrere Regalreihen als Beschickund Entnahmegerät verwendet werden.

Von besonderem Vorteil sind mit der Regalanordnung Kommisioniervorgänge zu erledigen, wenn an dem bewegbaren Entnahmegerät ein Sammelbehälter angeordnet ist, indem das Handhabungsgerät den Artikel ablegen kann. Damit kann bei einer Durchfahrt über die Regalanordnung hinweg eine Vielzahl verschiedener Artikel aus verschiedenen Regaleinheiten unter günstigsten Griffbedingungen entnommen werden, wobei das Paternosterregal für den nächsten, zu greifenden Artikel oder Behälter bereits in Entnahmeposition bewegt werden kann, während noch die Entnahme eines anderen Artikels stattfindet. Somit ist bei entsprechender Ansteuerung durch die Lagerdaten verwaltung der von einander unabhängigen Antriebe ein Minimum an Kommisionierzeit für einen Auftrag zu erreichen, da Leerfahrten bei der Ein- oder Auslagerung vermieden werden.

Die Erfindung ist anhand der Zeichnung näher erläutert und beschrieben. Es zeigt

Fig. 1 eine perspektivische schematische Darstellung der erfindungsgemäßen Regalanordnung;
Fig. 2 eine weitere Ausführungsform.

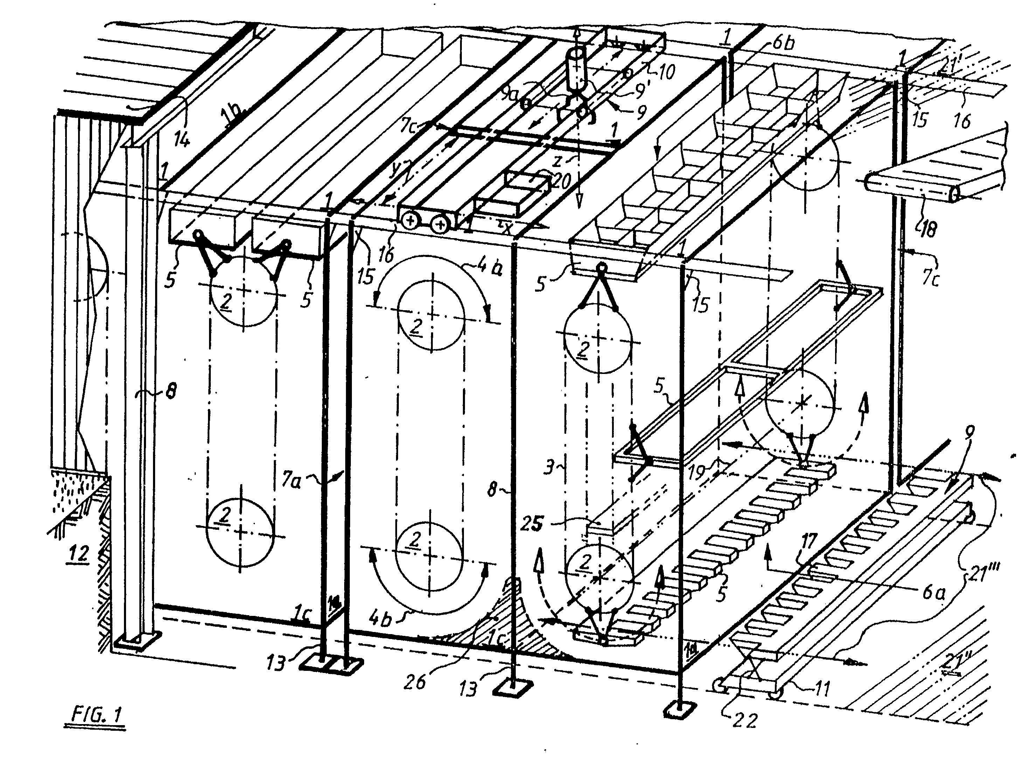

In der Ausführungsform in Fig. 1 sind eine Vielzahl von quaderförmigen Regaleinheiten 1 angedeutet. Jede Regaleinheit 1 umfaßt dabei zwei Kettenradpaare 2, über die endlose Ketten 3 geführt sind. Der Eingriff der Ketten räder 2 in die Ketten 3 definiert dabei den Überschubbereich 4 der an den Ketten 3 befestigten und mit diesen umlaufenden Ladegutträgern 5. Der obere Überschubbereich 4a befindet sich somit oberhalb der Achse 19 des oberen Kettenrades 2 und der untere Überschubbereich 4b unterhalb der Achse 19 des unteren Kettenrades 2 und stimmt in etwa in der vertikalen Projektion mit der oberen und unteren Deckfläche 1b der im wesentlichen quaderförmigen Regaleinheit 1 überein.

An den Längsseiten 1a und den Stirnseiten 1c der Regaleinheit 1 sind die einzelnen Regaleinheiten 1 zu einem Regalblock zusammengeschlossen und bilden somit mit ihren Längsseiten 1a die Stoßfläche 7a bzw. mit ihren Stirnseiten 1c die Stoßfläche 7c. Die Stoßfläche 7a ist - von rechts gesehen - zwischen der zweiten und dritten Regaleinheit 1 angedeutet und zur Darstellung der Längsseite 1a etwas auseinandergerückt. Diese bildet jedoch keinen Bedienungsgang, sondern eine sehr schmale Lücke, wenn z.B. die Regalanordnung nachträglich durch eine weitere Regaleinheit 1 erweitert wird. Im allgemeinen Fall werden jedoch die Regaleinheiten 1 mit jeweils gemeinsamen Tragpfosten 8 ausgerüstet, wie dies zwischen ersten und zweiten angedeutet und zwischen dritten und vierten Paternosterregaleinheit 1 in Form eines Stahlträgers 8 näher skizziert ist, so daß die Regaleinheiten unmittelbar aneinanderstoßen. An die Stirnseiten 1c-in der Tiefe dargestellt - schließen sich ebenso weitere Regaleinheiten 1 an, wobei die Stirnseiten 1c jeweils die Ketten 3 und die Kettenräder 2 beinhalten.

Die Seitenbezeichnungen 1a,b,c sind dabei nicht als z.B. mit Blechen verschlossenen Flächen, wie bei üblichen Einzelregalen, zu verstehen, da sich die Verkleidung der Regaleinheiten 1 durch die Blockanordnung in vorteilhafter Weise erübrigt. Lediglich die Außenflächen der dicht-an-dicht angeordneten Regaleinheiten 1 müssen noch verkleidet werden, was vorteilhaft gleichzeitig eine Halle 14 mit Dach bildet und die Tragpfosten 8 der Regaleinheiten zugleich die Tragkonstruktion für die Halle 14 darstellen. Die gesamte Regalanordnung ist hier teilweise in einem Kellerraum 12 versenkt dargestellt, so daß sich eine geringere Bauhöhe ergibt. Die horizontalen Hauptbedienebenen 21, in denen die Beschickgeräte 9 bewegbar sind, erstrecken sich dabei oberhalb 21' und unterhalb 21" des kompakten Regalblocks.

Erfindungsgemäß ist die Guteingabe 6a bzw. -ausgabe 6b jeweils an der oberen oder unteren Deckfläche 1b mit Zugriff im Bereich des oberen oder unteren Überschubbereichs 4a bzw. 4b angeordnet. In der Zeichnung erfolgt die Gutauslagerung z.B.von oben, während die Guteingabe von unten her erfolgt. Natürlich kann dies auch umgekehrt geschehen oder z.B. nur an der oberen Deckfläche 1b sowohl Ein- als auch Auslagerung erfolgen.

Die Regaleinheiten 1 nehmen vorzugsweise die jeweils gleiche Höhe ein und ebenso die gleiche Breite und Länge. Für schwere Teile kann dabei das Rastermaß der Breite in Y-Richtung unterteilt sein, wie dies für die zweite Regaleinheit 1 in der Reihe angedeutet ist, in dem zwei Regaleinheiten 1 die Breite von einer Regaleinheit 1 mit Normalbreite einnehmen. Über diesen beiden, schmäleren Regaleinheiten 1 ist das erfindungsgemäße Beschick- und Entnahmegerät 9 dargestellt. Als Beispiel wurde ein Brückenkran 10 eingezeichnet, der in der Haupterstreckungsrichtung X des gesamten Regalblocks verfahrbar ist und dabei jeweils bestimmte Stationen über den jeweiligen Regaleinheiten 1 anfährt. Zwischen den beiden Kranträgern ist eine Laufkatze in Y-Richtung verfahrbar, die ein Handabungsgerät 9' trägt. Dieses ist in Z-Richtung bewegbar bzw. ausfahrbar und reicht somit von oben in die Gutausgabeöffnung 6b an der oberen Deckfläche 1b und damit in den oder in die im oberen Überschubbereich 4a befindlichen Lagergutträger 5.

Die Lagergutträger können vielfältige Formen aufweisen, z.B. Universalbehälter oder auch lagergutspezifische Einsätze. Hier ist im oberen Überschubbereich 4a der ersten Regaleinheit ein vielfach unterteilter Behälter dargestellt, in dem z.B. Werkzeuge wie Fräsköpfe eingelagert sein können und durch den Zugriff des Greifers 9a, z.B. mittels Zangen oder Sauggreifer oder Magneten, erfaßt und vom Handhabungsgerät gehoben, sowie zu einer Ablagestation wie dem Förderband 18 oder dem mitfahrenden Sammelbehälter 20 transportiert wird.

Als weiteres Beispiel ist in der rechten Regaleinheit 1 auf halber Paternosterhöhe ein leiterförmiger Lagergutträger 5 mit hier zwei Öffnungen dargestellt. Diese Öffnungen können z.B. je einen wannenförmigen Behälter mit umgebördeltem, oberen Rand aufnehmen, der in den Rahmen dieses Lagergutträgers von oben her eingesetzt und z.B. mit einem Zangengreifer entnommen wird. Dadurch kann je nach Anforderung aus diesem Behälter einzelne Artikel entnommen werden oder aber auch der gesamte Behälter bei größerer Entnahmestückzahl aus dem Rahmen des Lagergutträgers gehoben werden.

Die hier angesprochene Art der Entnahme gilt natürlich in Umkehrung auch für die Beschickung. So können beispiels weise an der Längsseite des Brückenkrans 10, also in Y-Richtung, mehrere Sammelbehälter 20 angeordnet werden, die mit verschiedenem Lagergut bestückt sind. In der Fahrbewegung in X-Richtung kann der Brückenkran 10 eine Regaleinheit nach der anderen anfahren und jeweils ganze Behälter oder auch einzelne Artikel einlagern, um den Lagerbestand zu ergänzen. In der Rückfahrbewegung über den gesamten Regalblock bzw. eine Regalreihe hinweg kann das oder die Handhabungsgeräte bereits wieder auslagern und kommisionieren.

Für diese Art der Artikelhandhabung sind verschiedenste Typen von Handhabungsgeräten wie Knickarm-Roboter (sog. Scara-Bauweise) oder mit Teleskoparm usw. denkbar, wobei in vorteilhafter Weise mehrere, auch unterschiedliche Handhabungsgeräte mit z.B. Magnetgreifer für Einzelentnahme am einen und mit Zangengreifer für Behälterentnahme auf der oder den Laufkatzen als bewegliche Plattform montiert werden können. Anstatt des Brückenkranes kann auch ein ortsfest montierter Schwenkkran die oberen Gutein/ausgaben erreichen und z.B. ein Entnahmegerät tragen.

Der dargestellte Brückenkran 10 ist bei seiner Bewegung zu den einzelnen Regaleinheiten 1 an Führungen 16 geführt, wobei diese Laufschienen 16 von Halterungen 16 an den Tragpfosten 8 gestützt werden.

Auf ähnliche Weise ist eine unter den unteren Deckflächen 1b und den unteren Überschubbereichen 4b hindurchfahrbare Stichbahn 11 geführt, die auf Rollen entlang den mit gestrichelten Linien angedeuteten Schienen bewegbar ist. Hierzu sind die Regaleinheiten 1 auf Stützen 13 hochgestellt, um unterhalb der Umlaufbahn der Ladegutträger 5 den nötigen Bewegungsfreiraum zu schaffen. Für die Regalanordnung kann die gesamte Ein- und/oder Auslagerung über diese Stichbahn 11 erfolgen, wobei sie insbesondere für schwere Güter wie große Paletten, Blechpakete oder auch Kraftfahrzeuge geeignet ist. Dieses Lagergut wird auf die abgesenkte Plattform 17 der Stichbahn 11 gestellt, gelegt oder verfahren, woraufhin die Stichbahn 11 unter den Regaleinheiten 1 hindurch bis zu der Bestimmungs-Regaleinheit verfährt und etwa an der Stoßfläche 7a in Wartep    osition geht, da hier zwischen den halbkreisförmigen Überschiebebereichen ein Freiraum 26 vorhanden ist. Daraufhin wird die Plattform 17 mittels der Hubvorrichtung 22 angehoben bzw. bei Anordnung der Stichbahn 11 über den Regaleinheiten 1 abgesenkt, und damit in Höhe der Umlaufbahn der Lagergutträger 5 gebracht. Damit kann das Lagergut mittels einer nicht näher dargestellten Überschiebevorrichtung 27 auf den Lagergutträger 5 übergeschoben werden. Eine noch einfachere Möglichkeit der Übergabe zeigt die Zeichnung mittels der geschlitzten Plattform 17 und des entsprechend kammartig geschlitzten Lagergutträgers 5, da hierbei die Überschiebeeinrichtung 27 eingespart werden kann, weil durch die halbkreisförmige Bewegungsbahn der Lagergutträger 5 im Überschiebebereich 4a bzw. 4b die hochgestellte Bewegungsebene 21‴ der Plattform 17 untergriffen wird und mittels dieser "Schöpfbewegung" das Lagergut zum Einlagern übernommen bzw. zum Auslagern auf der Plattform 17 abgesetzt wird. Hierzu eignen sich auch Kraftfahrzeuge, die insbesondere mit ihrer Fahrtrichtung parallel zur Achse 19 der Kettenräder im Sinne einer Parkanlage platzsparend eingelagert werden können, wenn der Schlitzabstand der Plattform 17 bzw. des entsprechend ineinandergreifenden Lagergutträgers 5 kleiner als der Reifendurchmesser üblicher Pkw-Reifen gewählt wird, wobei die Kraftfahrzeuge selbsttätig auf die auf dem Niveau einer Zufahrtsstraße angeordnete Plattform 17 fahren können und die oberhalb oder unterhalb der Regaleinheiten 1 verfahrbare Stichbahn 11 nach Aussteigen des Fahrers und der Passagiere in die Regalanordnung einfährt, die somit als platzsparendes Parkhaus ausgebildet ist.

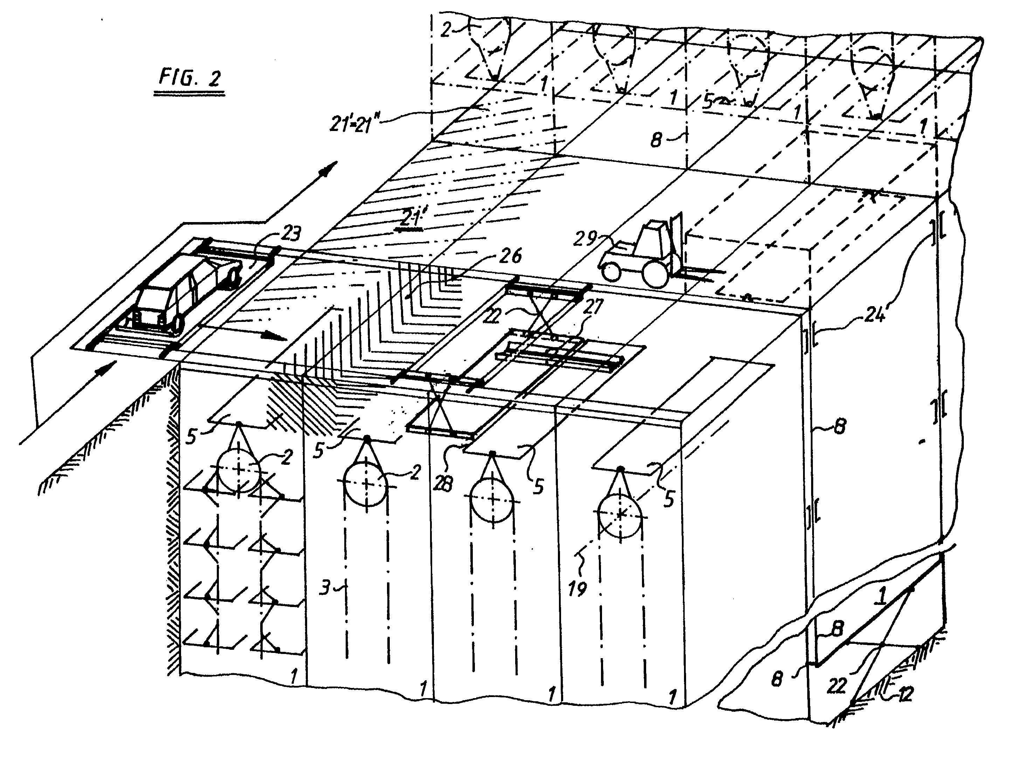

Dieses Parkhaus zeigt Fig. 2 in der Perspektive, wobei wiederum eine Vielzahl von Regaleinheiten 1 an ihren Längsseiten 1a und Stirnseiten 1c zu einem Regalblock zusammengeschlossen sind und die Gutein/-ausgabe 6a bzw. 6b in dieser Ausführungsform jeweils im oberen Überschiebebereich 4a angeordnet ist. Der Regalblock ist dabei in Art einer Tiefgarage im Boden versenkt. Das Beschick- und Entnahmegerät 9 bildet dabei eine in X-Achse verschiebbare Bühne 23, auf die Kraftfahrzeuge aufgefahren werden. Ebenso könnte ein Handhabungsgerät 9a oder auch ein Gabelstapler oder dgl. mit diesen Bühnen 23 mitfahrend angeordnet sein. Die Bühne 23 ist an der Stoßfläche 7a in den schraffiert eingezeichneten Freiraum 26 zwischen den Überschubbereichen absenkbar, und zwar vorteilhaft soweit, bis sich Bühne 23 und die Seitenkante 28 des jeweils obenstehenden Ladegutträgers 5 gegenüber in etwa auf Stoß stehen.

Auf dieser Höhe kann das Lagergut mit einer schubladenartigen Überschiebevorrichtung (27) auf den Lagergutträger (5) übergeschoben werden oder auch ein mitfahrendes Beschickgerät (9) wie z. B. ein Gabelstapler (29) eine Gutplatte entnehmen oder einlagern.

Ebenso können, wie im rückwärtigen Bereich der Regalanordnung angedeutet, einzelne Regaleinheiten (1) durch eine stationäre oder verfahrbare Hubeinrichtung (22) um etwa die Höhe eines Lagergutträgers (5) angehoben werden, um das Überschieben von der Hauptbedienebene (21) in die Ebene des obersten Lagergutträgers (5) zu ermöglichen. Hierzu sind die Tragpfosten (8) der Regaleinheiten (1) in Führungen (24) geführt, wobei diese Art der Anpassung der Überschiebehöhen vorzugsweise für leichtes Lagergut und damit auch leichter bauende Regaleinheiten anwendbar ist. Dadurch wird bei sehr hoher Raumausnutzung ein schneller Zugriff auf die einzelnen Regaleinheiten (1) erreicht.

Die Ansteuerung der Antriebe für die Regaleinheiten (1) und die Antriebe für das oder die Beschick- und/oder Entnahmegerät (9) erfolgt dabei durch einen Leitrechner in Verbindung mit der Datenverarbeitung über freie Plätze, Lagerposition usw., um sowohl die jeweils kürzeste Zugriffszeit zu ermitteln und auch Kollisionen zwischen den einzelnen Bewegungsbahnen zu verhindern. Desweiteren können gerade für den Spezialfall des Kraftfahrzeuges als Lagergut die genaue Größe des Fahrzeugs durch Sensoren ermittelt werden und der entsprechenden Regaleinheit (1) durch Hinweispfeile oder Stellmittel zugeleitet werden.

So kann, wie in Fig. 2 mittels dem Doppelpfeil links angedeutet, ein weiteres Fahrzeug bereits auf die Bühne 23 der nächstfolgenden Regalreihe fahren, während ein Fahrzeug noch verladen wird. In dieser zweiten Regalreihe ist die Hauptbedienebene 22, hier oben 21', schraffiert eingezeichnet. Auf dieser, im Falle der Ausführungsform als Parkhaus mit der Zufahrtstraße höhengleichen Hauptbedienebene kann auch ein selbstfahrender Gabelstapler 29 bewegt werden, der entweder seine Hubgabel in den Freiraum 26 auf die Höhe der Ladegutträger 5 absenken kann oder ihm der oberste Lagergutträger 5 durch die an Führungen 24 geführten Tragpfosten 8 in der Höhe entgegenkommt. Dabei wird die gesamte Regaleinheit 1 durch die Hubvorrichtung 22, hier eine Scherenhubbühne, angehoben.

In der dritten Regalreihe der Fig. 2 ist die entsprechend Anspruch 6 dargestellte Regalanordnung angedeutet, bei der zwei Regalblocks übereinander angeordnet sind und durch ein Beschick- und Entnahmegerät, das in der dazwischen angeordneten gemeinsamen Hauptbedienebene 21' verfahrbar ist, ein- bzw. ausgelagert wird. Damit bildet die obere (21') gleichzeitig die untere (21") Hauptbedienebene. Dabei können die oberen Lagergutträger 5 bei der Beschickung/Entnahme vorteilhaft nebeneinander auf gleicher Höhe stationiert sein, um den Zugriff zu beiden zu ermöglichen, wie dies in Anspruch 12 und im dritten Paternosterschrank von rechts in Fig. 1 angedeutet ist.

Durch die kompakte Anordnung der Regaleinheiten ergibt sich weiterhin die Aufgabe der Wartung der Paternosterschränke, die entsprechend den Ansprüchen 23 bis 25 durch in der Art von Verschieberegalen auseinanderschiebbaren Regaleinheiten 1, oder durch Nutzung der umlaufenden Lagergutträger 5 als Aufzug für das Wartungspersonal unter ggf. Ausbau einer oder mehrerer dicht übereinanderliegender Lagergutträger 5 in der benachbarten Regaleinheit 1 gelöst werden kann. Ebenso kann eine Wartungsplattform 25 - vgl. Fig. 1 rechte Regaleinheit - im Innern der Regaleinheit angeordnet sein, da dort ein geringer Freiraum verbleibt.

Die angedeuteten Ausführungsformen zeigen nur einen Teil der hier denkbaren Ein-/Auslagerungsarten in bzw. aus der erfindungsgemäßen Regalanordnung, die durch ihre kompakte Bauweise höchste Raumnutzung und durch die Beschickung bzw. Entnahme aus der oberen bzw. unteren Hauptbedienebene heraus einen überraschend schnellen, sicheren und flexiblen Zugriff erlaubt. So ergeben sich eine Vielzahl von Möglichkeiten, auf das jeweils unterschiedliche Lagergut in der jeweils günstigsten Richtung zuzugreifen und in der Hauptbedienebene nahezu in beliebiger Richtung abzutransportieren. Dies erlaubt in der Verbindung mit dem oder den jeweils an das Lagergutspektrum angepaßten Entnahmegeräten einen universellen Einsatz innerhalb eines Gesamtlagers mit unterschiedlichem Lagergut.

**Patentansprüche**

1. Regalanordnung, bestehend aus einer Anreihung mehrerer paternosterartiger Regaleinheiten (1) mit an wenigstens zwei endlosen Ketten (3) befestigten, umlaufenden Lagergutträgern (5), wobei die Ketten (3) in den Überschubbereichen (4a, 4b) der Lagergutträger (5) an um wenigstens eine Achse (19) antreibbaren Kettenrädern (2) geführt sind, sowie mit wenigstens einer Gutein- (6a) und -ausgabe (6b) quer zur Achse der Kettenräder, dadurch gekennzeichnet, daß die Regaleinheiten (1) mit ihren zur Achse (19) der Kettenräder (2) parallelen Längsseiten (1a) und ggf. mit ihren Stirnseiten (1c) zu einem Regalblock zusammengeschlossen sind, die Gutein- (6a) und -ausgabe (6b) jeweils an dem oberen und/oder unteren Überschubbereich (4a, 4b) vorgesehen ist, und die Beschickung und/oder Entnahme aus einer für den Regalblock gemeinsamen, horizontalen Hauptbedienebene (21) oberhalb und/oder unterhalb der Regaleinheiten (1) mittels wenigstens einem, mindestens in einer bzw. um eine Achse (X, Y, Z) bewegbaren Beschick- und/oder Entnahmegerät (9) erfolgt.

2. Regalanordnung nach Anspruch 1, dadurch gekennzeichnet, daß wenigstens je zwei Regaleinheiten (1) gemeinsame Tragpfosten (8) aufweisen.

3. Regalanordnung nach Anspruch 1, dadurch gekennzeichnet, daß das Beschick- bzw. Entnahmegerät (9) aus einem, über bzw. unter den Regaleinheiten (1) verfahrbaren Brückenkran (10) besteht, der in zwei Achsen (X,Y) bewegbar ist und wenigstens ein, in einer dritten Achse (Z) wirksames Hebezeug bzw. Handhabungsgerät (9') für Einzel- oder gruppenweise Entnahme von Lagergütern aufweist.

4. Regalanordnung nach Anspruch 1, dadurch gekennzeichnet, daß das Beschick- bzw. Entnahmegerät (9) aus einer Stichbahn (11) besteht, die unter den, auf Stützen (13) hochgestellten Regaleinheiten (1) bewegbar ist.

5. Regalanordnung nach Anspruch 1, dadurch gekennzeichnet, daß die Regaleinheiten (1) zumindest teilweise in einem Kellerraum (12) versenkt angeordnet sind.

6. Regalanordnung nach Anspruch 1, dadurch gekennzeichnet, daß zwei Regalanordnungen mit einem,einen Beschickungsund Entnahmegang bildenden Abstand übereinander angeordnet sind und ein gemeinsames Beschick- und Entnahmegerät (9) sowohl für die unteren als auch für die oberen Regaleinheiten (1) vorgesehen ist.

7. Regalanordnung nach Anspruch 1, dadurch gekennzeichnet, daß die Regaleinheiten (1) als mittragender Bestandteil der sie umgebenden Halle (14) ausgebildet sind.

8. Regalanordnung nach Anspruch 1, dadurch gekennzeichnet, daß die Tragpfosten (8) Halterungen (15) für die Führungen (16) des bewegbaren Beschick- und/oder Entnahmegerätes (9) aufweisen.

9. Regalanordnung nach Anspruch 1, dadurch gekennzeichnet, daß die Lagergutträger (5) und die bewegbaren Beschick- bzw. Entnahmegeräte (9) kammartig geschlitzte, ein Ineinandergreifen ermöglichende Plattformen (17) für das Lagergut bzw. Lagergutbehälter (5) aufweisen.

10. Regalanordnung nach Anspruch 1, dadurch gekennzeichnet, daß in Reichweite des bewegbaren Beschick- und/oder Entnahmegerätes (9) und neben der Regalanordnung ein zu- bzw. weiterförderndes Fördermittel (18), insbesondere ein Förderband, angeordnet ist.

11. Regalanordnung nach Anspruch 1, dadurch gekennzeichnet, daß das Beschick- und/oder Entnahmegerät (9) aus wenigstens einem ortsfest angeordneten, um die Z-Achse drehbaren Handhabungsgerät (9'), insbesondere einem Roboter vom Scara-Typ, besteht, dessen Reichweite sich über mehrere Regaleinheiten (1) erstreckt.

12. Regalanordnung nach Anspruch 1, dadurch gekennzeichnet, daß jeweils zwei benachbarte Lagergutträger (5) etwa auf gleicher Ebene im oberen Überschubbereich (4a) positionierbar ausgebildet sind.

13. Regalanordnung nach Anspruch 1, dadurch gekennzeichnet, daß die Erstreckung der Regaleinheiten (1) in Y-Richtung jeweils ein ganzzahliges Vielfaches eines Rastermaßes bildet.

14. Regalanordnung nach Anspruch 1, dadurch gekennzeichnet, daß die Antriebe der umlaufenden Ladegutträger (5) der Regaleinheiten (1) und des bewegbaren Beschick- und/oder Entnahmegerätes (9) zumindest in X-Richtung der Regalanordnung getrennt ansteuerbar sind.

15. Regalanordnung nach Anspruch 3, dadurch gekennzeichnet, daß das Handhabungsgerät (9') eine Wechselvorrichtung für die Greifer (9a) aufweist.

16. Regalanordnung nach Anspruch 3, dadurch gekennzeichnet, daß der Brückenkran (10) mehrere, unabhängig voneinander in Y- und Z-Richtung verfahrbare Handhabungsgeräte (9') mit jeweils verschiedenartigen Greifern (9a) aufweist.

17. Regalanordnung nach Anspruch 1, sowie Anspruch 9, dadurch gekennzeichnet, daß sich die Bewegungsebene (21''') der mittels einer Hubvorrichtung (22) anhebbaren Plattform (17) mit der Bewegungsbahn der Lagergutträger (5) zumindest im jeweiligen Überschubbereich (4a bzw. 4b) schneidet.

18. Regalanordnung nach Anspruch 1, dadurch gekennzeichnet, an dem bewegbaren Beschick- und/oder Entnahmegerät (9) wenigstens ein, mit diesem (9) mitbewegbarer Sammelbehälter (20) in Reichweite des Handhabungsgerätes (9') angeordnet ist.

19. Regalanordnung nach Anspruch 1, dadurch gekennzeichnet, daß das Beschick- und/oder Entnahmegerät (9) aus einer in der X - Achse verschiebbaren und begeh- und/oder befahrbaren Bühne (23) besteht, die auf die Höhe der Lagergutträger (5) im oberen Überschiebebereich (4a) absenkbar ist.

20. Regalanordnung nach A. 19, dadurch gekennzeichnet, daß die Bühne (23) sich etwa im Stoß an die Seitenkante (28) der Lagergutträger (5) anschließt.

21. Regalanordnung insbesondere nach Anspruch 1, dadurch gekennzeichnet, daß einzelne Regaleinheiten (1) durch wenigstens eine stationäre oder verfahrbare Hubvorrichtung (22) mit dem obersten Ladegutträger (5) auf die Höhe der Bühne (23) anhebbar ist.

22. Regalanordnung nach Anspruch 21, dadurch gekennzeichnet, daß die Tragpfosten (8) der einzelnen Regaleinheiten (1) in Führungen (24) geführt sind.

23. Regalanordnung nach Anspruch 1, dadurch gekennzeichnet, daß die Regaleinheiten (1) an ihren Stoßflächen (7a bzw. 7c) zur Bildung eines Wartungsspaltes auseinanderschiebbar sind.

24. Regalanordnung nach Anspruch 1, dadurch gekennzeichnet, daß einzelne Lagergutträger (5) zur Bildung einer umlaufenden Wartungsplattform lösbar an der Kette (3) befestigt sind.

25. Regalanordnung nach Anspruch 1, dadurch gekennzeichnet, daß im Innern der Regaleinheiten (1) zwischen den umlaufenden Lagergutträgern (5) eine höhenverstellbare Wartungsplattform (25) angeordnet ist.

26. Regalanordnung nach Anspruch 1, dadurch gekennzeichnet, daß der Regalblock aus wenigstens vier Regaleinheiten (1) besteht, die sowohl mit ihren Längsseiten (1a) und mit ihren Stirnseiten (1c) würfelförmig zusammengeschlossen sind.

**Revendications**

1. Ensemble de rayonnages, constitué d'un assemblage de plusieurs unités de rayonnages (1) du genre pater-noster, avec des portemarchandises (5) circulants, fixés à au moins deux chaînes sans fin (3), les chaînes (3) étant guidées, dans les zones de transfert (4a, 4b) des porte-marchandises (5), sur des roues à chaînes (2) qui peuvent être entraînées autour d'au moins un axe (19), et avec au moins une alimentation (6a) et une évacuation (6b) des marchandises perpendiculairement à l'axe des roues à chaînes, caractérisé en ce que les unités de rayonnages (1) sont réunies en un bloc de rayonnages par leurs côtés longitudinaux (1a) parallèles à l'axe (19) des roues à chaînes (2) et éventuellement par leurs côtés frontaux (1c), l'alimentation (6a) et l'évacuation (6b) des marchandises est respectivement prévue dans la zone de transfert supérieure et/ou inférieure (4a, 4b), et le chargement et/ou l'enlèvement s'effectue à partir d'un plan de service principal (21) horizontal, commun au bloc de rayonnages, au-dessus et/ou en dessous des unités de rayonnages (1), à l'aide d'au moins un appareil de chargement et/ou d'enlèvement (9) qui peut être déplacé dans ou autour d'au moins un axe (X, Y, Z).

2. Ensemble de rayonnages selon la revendication 1, caractérisé en ce qu'au moins deux des unités de rayonnages (1) présentent à chaque fois des montants porteurs (8) communs.

3. Ensemble de rayonnages selon la revendication 1, caractérisé en ce que l'appareil de chargement ou d'enlèvement (9) consiste en un pont portique (10) qui peut être déplacé au-dessus ou en dessous des unités de rayonnages (1), qui est mobile dans deux axes (X, Y) et qui présente au moins un appareil de levage ou de manutention (9'), opérationnel dans un troisième axe (Z), pour enlever des marchandises individuellement ou par groupes.

4. Ensemble de rayonnages selon la revendication 1, caractérisé en ce que l'appareil de chargement ou d'enlèvement (9) consiste en une embranchement (11) qui peut être déplacé en dessous des unités de rayonnages (1) surélevées sur des colonnes porteuses (13).

5. Ensemble de rayonnages selon la revendication 1, caractérisé en ce que les unités de rayonnages (1) sont au moins partiellement enfoncées dans un sous-sol (12).

6. Ensemble de rayonnages selon la revendication 1, caractérisé en ce que deux ensembles de rayonnages sont disposés l'un au-dessus de l'autre à une distance formant un passage de chargement et d'enlèvement, et un appareil de chargement et d'enlèvement (9) commun est prévu tant pour les unités de rayonnages (1) supérieures qu'inférieures.

7. Ensemble de rayonnages selon la revendication 1, caractérisé en ce que les unités de rayonnages sont réalisées sous forme d'éléments porteurs du hangar (14) qui les entoure.

8. Ensemble de rayonnages selon la revendication 1, caractérisé en ce que les montants porteurs (8) présentent des supports (15) pour les glissières de guidage (16) de l'appareil de chargement et/ou d'enlèvement mobile (9).

9. Ensemble de rayonnages selon la revendication 1, caractérisé en ce que les porte-marchandises (5) et les appareils de chargement ou d'enlèvement mobiles (9) présentent des plate-formes (17) pour la marchandise ou le récipient de marchandises (5), qui sont fendues à la manière d'un peigne et qui permettent un engagement mutuel.

10. Ensemble de rayonnages selon la revendication 1, caractérisé en ce qu'un convoyeur d'alimentation ou d'évacuation (18), notamment une bande transporteuse, est disposé à portée de l'appareil de chargement et/ou d'enlèvement mobile (9) et à côté de l'ensemble de rayonnages.

11. Ensemble de rayonnages selon la revendication 1, caractérisé en ce que l'appareil de chargement et/ou d'enlèvement (9) comprend au moins un appareil de manutention (9') disposé stationnairement et rotatif autour de l'axe Z, en particulier un robot du type Scara, dont la portée s'étend sur plusieurs unités de rayonnages (1).

12. Ensemble de rayonnages selon la revendication 1, caractérisé en ce que deux porte-marchandises (5) voisins sont conçus de manière à pouvoir être positionnés à chaque fois approximativement sur le même plan dans la zone de transfert supérieure (4a).

13. Ensemble de rayonnages selon la revendication 1, caractérisé en ce que l'étendue des unités de rayonnages (1) dans la direction Y constitue à chaque fois un multiple entier d'une dimension modulaire.

14. Ensemble de rayonnages selon la revendication 1, caractérisé en ce que les entraînements des porte-marchandises circulants (5) des unités de rayonnages (1) et de l'appareil de chargement et/ou d'enlèvement mobile (9) peuvent être commandés séparément au moins dans la direction X de l'ensemble de rayonnages.

15. Ensemble de rayonnages selon la revendication 3, caractérisé en ce que l'appareil de manutention (9') présente un dispositif de remplacement des éléments preneurs (9a).

16. Ensemble de rayonnages selon la revendication 3, caractérisé en ce que le pont portique (10) présente plusieurs appareils de manutention (9'), munis chacun d'éléments preneurs (9a) de types différents et qui peuvent être déplacés indépendamment les uns des autres dans la direction Y et dans la direction Z.

17. Ensemble de rayonnages selon la revendication 1, ainsi que selon la revendication 9, caractérisé en ce que le plan de déplacement (21''') de la plate-forme (17), qui peut être soulevée au moyen d'un dispositif de levage (22), coupe la voie de déplacement des porte-marchandises (5) au moins dans la région de transfert respective (4a ou 4b).

18. Ensemble de rayonnages selon la revendication 1, caractérisé en ce qu'au moins un récipient collecteur (20), qui peut être déplacé conjointement avec l'appareil de chargement et/ou d'enlèvement mobile (9), est disposé sur cet appareil (9), à portée de l'appareil de manutention (9').

19. Ensemble de rayonnages selon la revendication 1, caractérisé en ce que l'appareil de chargement et/ou d'enlèvement (9) est une plate-forme (23), praticable et/ou carrossable, mobile dans la direction X, qui peut être abaissée à hauteur des porte-marchandises (5) dans la zone de transfert supérieure (4a).

20. Ensemble de rayonnages selon la revendication 19, caractérisé en ce que la plate-forme (23) se raccorde approximativement bout-à-bout au bord latéral (28) des porte-marchandises (5).

21. Ensemble de rayonnages selon la revendication 1, caractérisé en ce qu'au moins un dispositif de levage (21), stationnaire ou mobile en translation, permet de soulever des unités de rayonnages individuelles (1) pour que le porte-marchandises (5) le plus haut se trouve à hauteur de la plate-forme (23).

22. Ensemble de rayonnages selon la revendication 21, caractérisé en ce que les montants porteurs (8) des différentes unités de rayonnages (1) sont guidés dans des glissières de guidage (24).

23. Ensemble de rayonnages selon la revendication 1, caractérisé en ce que les unités de rayonnages peuvent être écartées par translation dans la région de leurs faces d'about (7a ou 7c), afin de former un passage d'entretien.

24. Ensemble de rayonnages selon la revendication 1, caractérisé en ce que des porte-marchandises individuels (5) sont fixés de manière amovible à la chaîne (3), afin de former une plate-forme d'entretien circulante.

25. Ensemble de rayonnages selon la revendication 1, caractérisé en ce qu'une plate-forme d'entretien (25), réglable en hauteur, est disposée à l'intérieur des unités de rayonnages (1), entre les porte-marchandises circulants (5).

26. Ensemble de rayonnages selon la revendication 1, caractérisé en ce que le bloc de rayonnages est constitué d'au moins quatre unités de rayonnages (1), qui sont réunies en cube tant par leurs côtés longitudinaux (1a) que par leurs côtés frontaux (1c).

## Claims

1. Storage system comprising a side-by-side arrangement of a plurality of paternoster-like storage units (1) including circulating storage article carriers (5) mounted at at least two endless chains (3) the chains (3) being guided in the overpassing regions (4a, 4b) of the storage article carriers (5) at chain gears (2) drivable about at least one axis (19), and at least one article input (6a) and output (6b) lateral in respect of the axis of the chain gears, characterized in that the storage units (1) are connected to a storage block at their longitudinal sides (1a) parallel to the axis (19) of the chain gears (2) and, if desired, at their end sides (1c), that the article input (6a) and output (6b) are provided each at the upper and/or lower overpassing region (4a, 4b) and that the input and/or output from a horizontal main operational plane (21) common to the storage block above and/or below the storage units (1) is accomplished by at least one input and/or output device (9) at least movable in or around one axis (X, Y, Z).

2. Storage system of claim 1, characterized in that at least two storage units (1) each have a common support post (8).

3. Storage system of claim 1, characterized in that the input and output device (9), respectively, comprises a bridge crane (10) movable above or below, respectively, the storage unit (1) in two axes (X, Y) and is provided with at least one lifting device or handling device (9'), respectively, acting in a third axis (Z) for a single or groupwise output of storage articles.

4. Storage system of claim 1, characterized in that the input and/or output device (9) comprises an one-ended track (11) movable below the storage units (1) raised on pillars (13).

5. Storage system of claim 1, characterized in that the storage units (1) are arranged at least partially lowered in a cellar room (12).

6. Storage system of claim 1, characterized in that two storage systems are arranged above each other at a distance forming an input and output walkway and that there is provided a common input and output device (9) both for the lower and the upper storage units (1).

7. Storage system of claim 1, characterized in that the storage units (1) are formed as a co-supporting part of the hall (14) surrounding them.

8. Storage system of claim 1, characterized in that the support posts (8) are provided with fixing means (15) for the guides (16) of the movable input and/or output device (9).

9. Storage system of claim 1, characterized in that the storage article carriers (5) and the movable input and output devices (9), respectively, comprise comb-like slit platforms (17) for the storage articles or the storage article container (5) enabling a meshing engagement.

10. Storage system of claim 1, characterized in that at gripping distance of the movable input and/or output device (9) and beside the storage system there is provided a transport means (18) in particular a conveyer-belt for a supplying, respectively, a further transport.

11. Storage system of claim 1, characterized in that the input and/or output device (9) comprises at least one stationary arranged handling device (9') rotatable about the Z-axis, in particular a robot of the Scara type the operating range thereof extending over several storage units (1).

12. Storage system of claim 1, characterized in that two adjacent storage article carriers (5) each are designed to be positionable approximately in the same plane in the upper overpassing region (4a).

13. Storage system of claim 1, characterized in that the extension of the storage units (1) in Y-direction is an integer multiple of a raster scale.

14. Storage system of claim 1, characterized in that the drives of the circulating storage article carriers (5) of the storage units (1) and of the movable input and/or output device (9) are separately controllable at least in X-direction of the storage system.

15. Storage system of claim 3, characterized in that the handling device (9') comprises an exchanging means for the gripping device (9a).

16. Storage system of claim 3, characterized in that the bridge crane (10) comprises a plurality of handling devices (9′) movable independently from each other in Y- and Z-directions and having different gripping devices (9a) each.

17. Storage system of claim 1 and claim 9, characterized in that the plane of movement (21‴) of the platform (17) liftable by means of a lifting means (22) intersects the path of movement of the storing article carriers (5) at least in the respective overpassing region (4a or 4b, respectively).

18. Storage system of claim 1, characterized in that at the movable input and/or output device (9) in the operating range of the handling device (9′) at least one collecting container (20) is arranged movable therewith (9).

19. Storage system of claim 1, characterized in that the input and/or output device (9) comprises a stage (23) adapted to be slided in the X-axis and to be entered and/or to be driven therein and to be lowered to the level of the storage article carriers (5) in the upper overpassing region (4a).

20. Storage system of claim 19, characterized in that the stage (23) is connected approximately at the engagement position to the side edge (28) of the storage article carriers (5).

21. Storage system in particular of claim 1, characterized in that individual storage units (1) are liftable onto the level of the stage (23) by means of at least one stationary or movable lifting means (22) together with the topmost article carrier (5).

22. Storage system of claim 21, characterized in that the support posts (8) of the individual storage units (1) are guided in guidances (24).

23. Storage system of claim 1, characterized in that the storage units (1) are adapted to be slidably separated at their engagement surfaces (7a and 7c, respectively) for forming a service gap.

24. Storage system of claim 1, characterized in that individual article carriers (5) are releasably fixed to the chain (3) for forming a circulating service platform.

25. Storage system of claim 1, characterized in that in the interior of the storage units (1) there is provided a height-adjustable service platform (25) between the circulating article carriers (5).

26. Storage system of claim 1, characterized in that the storage block comprises at least four storage units (1) connected together in the form of a cube both with their longitudinal sides (1a) and their end sides (1c).

FIG. 1

EP 0 263 988 B1

FIG. 2